# EUROPÄISCHE PATENTSCHRIFT

(11) **EP 3 072 621 B1**
(45) Veröffentlichungstag und Bekanntmachung des Hinweises auf die Patenterteilung: **29.07.2020**
(21) Anmeldenummer: 16161753.5
(22) Anmeldetag: 22.03.2016
(51) Int. Cl.: B23H 7/10, B23H 7/26, B24B 53/00

(54) **DRAHTFÜHRUNG ZUR FÜHRUNG EINER DRAHTELEKTRODE BEIM DRAHTERODIEREN**
WIRE GUIDE FOR GUIDING A WIRE ELECTRODE
GUIDE-FIL DESTINE A GUIDER UN FIL-ELECTRODE

(30) Priorität: 24.03.2015 DE 102015104405
(43) Veröffentlichungstag der Anmeldung: 28.09.2016
(73) Patentinhaber: Fritz Studer AG, 3612 Steffisburg (CH)
(72) Erfinder: Klotz, Michael, 3612 Steffisburg (CH)
(74) Vertreter: Witte, Weller & Partner Patentanwälte mbB

(56) Entgegenhaltungen:
- EP-A1- 2 607 006
- WO-A1-00/05024
- JP-A- S63 102 834
- US-A- 5 660 579

## Beschreibung

Die vorliegende Erfindung betrifft eine Drahtführung zur Führung einer Drahtelektrode beim rotativen Drahterodieren eines Werkstücks gemäß dem Oberbegriff des Anspruchs 1. Eine solche Drahtführung ist aus der EP 2 607 006 A1 bekannt.

Aus der WO 00/05024 A1 ist ein Verfahren sowie eine Vorrichtung zum Funkenerosiven Drahtschneiden bekannt.

Die JP S63 102834 A offenbart eine Vorrichtung zur elektrischen Entladung einer Drahtschneidevorrichtung.

Die US 5 660 579 A betrifft eine Vorrichtung und ein Verfahren zur Formgebung von Schleifscheiben.

Drahterodiermaschinen (Wire Electrical Discharge Machining, WEDM) basieren auf dem Prinzip der funkenerosiven Materialabtragung zur Formgebung von Werkstücken. Durch elektrische Spannungspulse werden Funken zwischen einem Werkstück (Anode) und einem durchlaufenden dünnen Draht (Kathode) erzeugt. Durch diese Funken wird Material vom Werkstück auf den Draht sowie in das trennende Medium, das Dielektrikum, übertragen. Der Draht wird anschließend entsorgt. Die Genauigkeit des Verfahrens beruht darauf, dass der Funke stets an der Stelle überspringt, wo der Abstand von Werkstück und Draht minimal ist. Der Draht (Drahtelektrode, Erodierdraht) wird mittels einer Drahtführung entlang einer gewünschten Kontur geführt.

Die Drahtführung spielt bei der Bearbeitungsgenauigkeit eine wesentliche Rolle. WEDM setzen oft geschlossene sogenannte ziehsteinförmige Führungen ein. Auch offene V-Führungen werden von einigen WEDM-Herstellern eingesetzt. Normalerweise wird der Draht über eine bestimmte "freie Spannweite" gegenüber dem Werkstück geführt. Oft weist die Drahtführung zwei voneinander beabstandete, übereinanderliegende Führungselemente auf. Diese Führungselemente können gegenüber dem Werkstück Relativbewegungen in X- und Y-Richtung ausführen. Eine der beiden Drahtführungen kann gegenüber der anderen Drahtführung zusätzlich eine Relativbewegung in U- und V-Richtung ausführen. Der Draht kann dadurch entlang beliebiger zweidimensionaler Konturen geführt werden. Auf diese Weise können sog. zylindrische, d.h. vertikale und/oder konische Drahterosionsbearbeitungen ausgeführt werden.

Durch Integration einer Zusatzachse oder -Spindel ist darüber hinaus ein rotatives Drahterodieren bzw. funkenerosives Drehen möglich. Bei dieser Verfahrensvariante dreht sich das Werkstück während der Bearbeitung mit bis zu mehreren tausend Umdrehungen pro Minute. Die Drahtelektrode verläuft dabei üblicherweise vertikal, senkrecht zur Rotationsachse. Während der Drehung kann durch die Drahtelektrode eine Kontur in das Werkstück eingebracht werden.

Eine hierauf basierende Anwendung ist die Profilierung metallgebundener Superabrasivschleifscheiben mittels Drahterosion (Wire Electrical Discharge Dressing, WEDD). Diese Schleifscheiben bestehen aus einem Superabrasivkorn, beispielsweise Diamant oder cBN, das in eine metallische Bindung, typischerweise Bronze, Eisen oder Kobalt, eingebettet ist. Solche Bindematerialien haben ausgezeichnete, für den Schleifprozess wesentliche Eigenschaften, insbesondere in Bezug auf Formstabilität, Kornbindung, Temperaturbeständigkeit und Wärmeleitfähigkeit. Metallbindungen der Superabrasivschleifscheiben sind grundsätzlich leitfähig und somit gut erodierbar. Das nichtleitende Korn wird hingegen nicht direkt abgetragen.

Im Vergleich zu konventionellen Abrichtverfahren mit Einkorndiamant, drehender SiC-Scheibe, usw., bei denen der Verschleiß am Abrichtwerkzeug und an der Schleifscheibe beträchtlich sein kann, erlaubt die Drahterosion eine höhere Effizienz beim Profilieren und Schärfen metallgebundener Superabrasivschleifscheiben, insbesondere bei der Herstellung kleiner Radien. Zudem können größere Kornüberstände erzielt werden.

Beim rotativen Drahterodieren können prinzipiell konventionelle Drahtführungen, wie oben beschrieben, eingesetzt werden. Allerdings wird die Drahtelektrode durch Prozesskräfte, Antriebseinflüsse und durch die bei der Rotation des Werkstücks verursachten hydraulischen Kräfte des Kühlschmierstoffs abgelenkt und/oder in Schwingung versetzt. Beim Abrichten von Schleifscheiben als Werkstück wird dieser Effekt noch durch die poröse Oberfläche der Schleifscheibe verstärkt. Sowohl eine Drahtablenkung als auch eine Schwingung der Drahtelektrode sind unerwünscht, da sie für die Prozesskontrolle hinderlich sind und direkt die Konturgenauigkeit beeinflussen.

In EP 2 607 006 A1 ist eine schwenkbare Drahtführung offenbart, die eine Verminderung der Auslenkung erlaubt. Eine Vorrichtung zum rotativen Drahterodieren eines Werkstückes mit einer gekrümmten mit einer scheibenförmig ausgebildeten und vorzugsweise gekrümmten Drahtführung. Die Vorrichtung ist derart ausgebildet, dass die relative Winkellage zwischen Drahtführung und Werkstück um eine Achse parallel zur Drahtlaufrichtung am Arbeitspunkt einstellbar ist. Des Weiteren ist eine scheibenförmige Drahtführung zur Führung einer Drahtelektrode für das rotative Drahterodieren eines Werkstückes offenbart, wobei die Dicke der scheibenförmigen Drahtführung kleiner ist als der 1,5-fache Betrag des Durchmessers der Drahtelektrode und im Weiteren am Umfang eine Führungsnut aufweist, wobei die Drahtführung im Wirkbereich der Funkenerosion eine Aussparung aufweist.

Allerdings kann es auch bei so gearteten Drahtführungen zu Auslenkungen bzw. zu Schwingungen der Drahtelektrode insbesondere in ihrem frei gespannten Bereich im Wirkbereich der Funkenerosion kommen. Dies kann zu einer geringeren Genauigkeit bzw. zu einem Verlust an Prozesskontrolle führen.

Es ist daher eine Aufgabe der vorliegenden Erfindung, eine Drahtführung für das rotative Drahterodieren zu optimieren. Insbesondere soll das Erzielen einer höheren Genauigkeit ermöglicht werden.

Gemäß einem ersten Aspekt betrifft die Erfindung eine Drahtführung zur Führung einer Drahtelektrode beim rotativen Drahterodieren eines Werkstücks mit einem Führungselement zur Führung der Drahtelektrode und einem Aktor zur Einwirkung auf die Drahtelektrode, um den Verlauf der Drahtelektrode im Wirkbereich der Funkenerosion zur Entgegenwirkung von Schwingungen der Drahtelektrode und/oder zur Feinjustierung der Drahtelektrode zu verändern, wobei der Aktor als Piezoaktor ausgebildet ist und eine erste elektrische Kontaktierungsstelle zum Anlegen einer Spannung, um den Verlauf der Drahtelektrode durch eine Formveränderung des Piezoaktors zu verändern, umfasst, die Drahtführung im Wesentlichen scheibenförmig mit einer Führungsnut für die Drahtelektrode im Umfang ausgebildet ist, der Piezoaktor zur Auslenkung der Drahtelektrode radial zur scheibenförmigen Drahtführung und orthogonal zur Drahtelektrode in ihrem Wirkbereich ausgebildet ist, und das Führungselement und der Aktor als integriertes Element ausgebildet sind.

Die Drahtführung bezeichnet in diesem Zusammenhang ein Bauteil einer Drahterodiermaschine oder sonstigen Werkzeugmaschine, die den Prozess Drahterosion ausführt, mittels dessen die Drahtelektrode gegenüber dem Werkstück geführt werden kann. Ein Teil dieser Drahtführung wird als Führungselement bezeichnet, wobei das Führungselement insbesondere denjenigen Teil der Drahtführung bezeichnet, der in direktem Kontakt mit der Drahtelektrode steht. Erfindungsgemäß ist die Drahtführung im Wesentlichen scheibenförmig mit einer Führungsnut für die Drahtelektrode im Umfang ausgebildet. Die Drahtelektrode läuft in einer Führungsnut im Umfang der scheibenförmigen Drahtführung. Üblicherweise weist die scheibenförmige Drahtführung eine Aussparung auf. Die Drahtelektrode ist über diese Aussparung gespannt. Der Wirkbereich der Funkenerosion befindet sich üblicherweise im frei gespannten Teil der Drahtelektrode kann aber auch im nicht ausgesparten Bereich liegen. Der Aktor kann sowohl vor als auch nach der Aussparung bezüglich des Verlaufs der Drahtelektrode angeordnet sein. Das Führungselement bezeichnet den Teil der Scheibe, der in direktem Kontakt mit der Drahtelektrode ist. Vorteilhaft an einer scheibenförmigen Drahtführung ist insbesondere, dass nur eine geringe freie Spannweite der Drahtelektrode benötigt wird. Vorteilhaft ist weiterhin, dass die aus EP 2 607 006 A1 bekannte Prinzipien zur Schwenkung angewendet werden können. Durch die erfindungsgemäße Schwingungskompensation wird die Genauigkeit der aus EP 2 607 006 A1 bekannten Ausführungsformen weiter erhöht.

Die Drahtelektrode wird erfindungsgemäß mittels eines Führungselements geführt. Das Führungselement befindet sich in Kontakt mit der Drahtelektrode. Durch das Führungselement wird die Drahtelektrode in die Nähe des Werkstücks gebracht. In einem Wirkbereich der Funkenerosion findet die Materialabtragung am Werkstück statt. Das Führungselement kann einstückig ausgeführt sein oder auch aus mehreren Elementen (beispielsweise Rollen oder Umlenkungen) oder Segmenten bestehen. Zumeist bewirkt das Führungselement, dass ein Teil der Drahtelektrode im Wirkbereich der Funkenerosion frei gespannt ist.

Weiterhin umfasst die erfindungsgemäße Drahtführung einen Aktor. Durch den Aktor kann auf die Drahtelektrode eingewirkt werden. Abträglich für die Genauigkeit der Materialabtragung durch das Drahterodieren sind insbesondere Schwingungen der Drahtelektrode im Wirkbereich der Funkenerosion. Der Aktor erlaubt das Ausüben eines Wegs bzw. einer Kraft auf die Drahtelektrode. Durch diesen Weg bzw. durch diese Kraft wird der Verlauf der Drahtelektrode gegenüber dem Führungselement bzw. gegenüber den feststehenden Komponenten einer Erodiermaschine sowie gegenüber dem Werkstück geändert. Hierdurch können Schwingungen der Drahtelektrode verhindert oder verringert werden. Dies entspricht einer Dämpfung. Insbesondere können durch den Aktor Schwingungen der Drahtelektrode orthogonal zu ihrem Verlauf verhindert oder vermindert werden. Ebenfalls kann der Verlauf der Drahtelektrode beeinflusst werden, um eine Feinjustierung, also eine genau steuerbare Verlaufsänderung der Drahtelektrode, zu ermöglichen. Dies stellt eine Möglichkeit dar, den Verlauf des Erodierprozesses zu steuern. Üblicherweise ist eine geringe Veränderung des Verlaufs der Drahtelektrode beispielsweise im Mikrometerbereich ausreichend, um Schwingungen entgegenzuwirken und/oder eine nützliche Feinjustierung zu ermöglichen. Erfindungsgemäß ist der Aktor als Piezoaktor ausgebildet, um den Verlauf der Drahtelektrode durch eine Formveränderung des Piezoaktors zu verändern. In anderen Worten ausgedrückt verläuft die Drahtelektrode über einen Piezoaktor. Der Piezoaktor ist in die Führung der Drahtelektrode integriert (ein Teil der Drahtführung besteht aus piezoelektrischem Material und wirkt als Aktor, ein weiterer Teil der Drahtführung wirkt als Führungselement). Ein Piezoaktor umfasst insbesondere ein piezoelektrisches Material, beispielsweise eine Keramik. Dieses piezoelektrische Material kann seine Form aufgrund des piezoelektrischen Effekts beim Anlegen einer elektrischen Spannung verändern. Diese Formänderung erzeugt die erfindungsgemäße Änderung des Verlaufs der Drahtelektrode. Vorteilhaft an der Ausgestaltung des Aktors als Piezoaktor ist insbesondere, dass eine sehr reaktionsschnelle Rückkopplung zwischen angelegter Spannung (Steuersequenz) und erzeugter Formveränderung erfolgen kann. Ein Piezoaktor kann mit sehr hohen Frequenzen angesteuert werden. Folglich kann einer Schwingung der Drahtelektrode mit hohen Frequenzen adäquat entgegengewirkt werden. Ebenfalls ist es möglich, dass eine konstante Spannung angelegt wird, wodurch es zu einer permanenten Formveränderung und damit zu einer permanenten Verlaufsänderung der Drahtelektrode kommt, welche eine Feinjustierung der Drahtelektrode gegenüber dem Werkstück erlaubt. Zuletzt ist auch eine Kombination beider Betriebsmodi (Feinjustierung und Entgegenwirkung von Schwingungen) problemlos möglich. Weiterhin ist der Piezoaktor zur Auslenkung der Drahtelektrode radial zur scheibenförmigen Drahtführung und orthogonal zur Drahtelektrode im Winkelbereich ausgebildet. Die Auslenkung radial zur scheibenförmigen Drahtführung erlaubt eine Kompensation von Schwingungen der Drahtelektrode in Radialrichtung zur scheibenförmigen Drahtführung. Die Auslenkung ist üblicherweise im Mikrometerbereich. Folglich werden Schwingungen in Richtung des Werkstücks kompensiert. Diese Schwingungen wirken sich besonders negativ auf die erzielbare Genauigkeit aus.

Führungselement und Aktor sind integriert ausgeführt . Der Aktor wirkt also ebenfalls als Führungselement Dies entspricht folglich einer Drahtführung zur Führung der Drahtelektrode mit integriertem Aktor. Demnach führt der Aktor direkt die Drahtelektrode und bildet damit das Führungselement bzw. stellt einen Teil des Führungselements dar. Vorteilhaft ist hierbei, dass der Bauraum minimiert wird und die Herstellungskosten reduziert werden. Für den Piezoaktor bedeutet dies, dass die Drahtführung aus piezoelektrischem Material (beispielsweise Keramik) besteht und gleichzeitig als Führungselement und als Aktor wirkt.

Erfindungsgemäß wird somit das oben dargestellte Problem vollständig gelöst.

Es kann eine höhere Genauigkeit im Vergleich zu bisherigen Drahtführungen, welche keine aktive Schwingungskompensation oder Feinjustierung durch einen separaten Aktor vorsehen, erreicht werden. Hierdurch kommt es zu einer höheren Prozesskontrolle. Beim Schleifen mit metallgebundenen Superabrasivschleifscheiben kann damit beispielsweise eine bessere Abrichtung der Schleifscheiben im Sinne einer höheren Genauigkeit sowie einer geringeren Abricht-Häufigkeit und damit einer höheren Lebensdauer erreicht werden.

Bei einer vorteilhaften Ausgestaltung der erfindungsgemäßen Drahtführung ist der Aktor zur Einwirkung entsprechend einer Steuersequenz zur Entgegenwirkung von Schwingungen der Drahtelektrode ausgebildet, wobei die Steuersequenz auf Basis einer Vormessung vordefiniert ist oder auf Basis einer Messung von Schwingungen der Drahtelektrode in Echtzeit ermittelt wird. Eine Steuersequenz bezeichnet dabei insbesondere eine zeitliche Folge von Kontrolikommandos, welche von dem Aktor in Wegeinwirkungen bzw. Krafteinwirkungen auf die Drahtelektrode bzw. in entsprechende Verlaufsänderungen umgesetzt werden. Beispielsweise kann eine Steuersequenz eine zeitliche Spannungsfolge umfassen.

Diese Steuersequenz kann auf Basis einer Vormessung vordefiniert sein. Hierbei erfolgt demnach keine direkte Rückkopplung zwischen dem aktuellen Verhalten (Schwingungsverhalten) der Drahtelektrode und der (zumeist entgegengerichteten) Einwirkung durch den Aktor. Die Festlegung der Steuersequenz erfolgt auf Basis von Annahmen über Schwingungen der Drahtelektrode. Beispielsweise können Schwingungen einer bestimmten Frequenz durch die Dimensionierung der Drahtführung (Länge des frei gespannten Teils der Drahtelektrode, etc.) oder durch eine (vordefinierte oder einstellbare) Umlaufgeschwindigkeit des Drahtes sowie die Antriebsart oder dem Drahtverlauf bedingt sein. Diese Schwingungen sind demnach unabhängig vom aktuellen Erodiervorgang. Basierend auf dieser Dimensionierung oder dieser Umlaufgeschwindigkeit könnte dann eine entsprechende Steuersequenz vordefiniert werden.

Alternativ ist es möglich, dass die Schwingungen der Drahtelektrode gemessen werden und eine entsprechende Steuersequenz zu Entgegenwirkung der aktuell gemessenen Schwingungen im Sinne eines Regelkreises generiert wird. Die Steuersequenz wird bevorzugt in Echtzeit ermittelt.

Bei einer Ausgestaltung sind die erste elektrische Kontaktierungsstelle und die zweite elektrische Kontaktierungsstelle auf gegenüberliegenden Stirnseiten der scheibenförmigen Drahtführung angeordnet und die Formveränderung kommt durch den Piezo-Quereffekt zustande. Hierbei wird der Piezo-Quereffekt ausgenutzt. Dieser Effekt bezeichnet eine Formveränderung quer zur Richtung der angelegten Spannung.

In einer alternativen Ausgestaltung der beschriebenen scheibenförmigen Drahtführung sind die erste elektrische Kontaktierungsstelle und die zweite elektrische Kontaktierungsstelle an radial gegenüberliegenden Umfangsstellen der scheibenförmigen Drahtführung parallel zur Drahtelektrode in ihrem Wirkbereich angeordnet und die Formveränderung kommt durch den Piezo-Längseffekt zustande. Durch den Piezo-Längseffekt erfolgt eine Formveränderung des piezoelektrischen Materials in Richtung der angelegten Spannung.

Piezo-Quereffekt und Piezo-Längseffekt stehen orthogonal zueinander und beschreiben die Richtung der Formänderung eines piezoelektrischen Materials in Bezug zur Richtung der angelegten Spannung. Ein piezoelektrisches Material weist normalerweise entweder den einen oder den anderen Effekt auf. Je nach Kontaktierung können bei der vorliegenden Erfindung piezoelektrische Materialien mit beiden Effekten verwendet werden. Die radiale Auslenkung bei einer scheibenförmigen Drahtführung kann mit beiden erreicht werden. Vorteile bzw. Unterschiede ergeben sich in Bezug auf den erforderlichen Bauraum sowie die erzielbare Auslenkungsamplitude.

In einer weiteren Ausführungsform betrifft die vorliegende Erfindung eine Vorrichtung zum rotativen Drahterodieren eines Werkstücks mit einer Drahtführung wie oben beschrieben. Eine solche Vorrichtung entspricht beispielsweise einer Drahterodiermaschine, mit der ein Werkstück durch Drahterosion formgebend verändert werden kann. Eine solche Vorrichtung kann beispielsweise als separate Drahterodiereinheit in eine Schleifmaschine zum Abrichten der Schleifscheiben integriert bzw. integrierbar sein.

Vorteilhafterweise weist die Vorrichtung eine Steuereinheit zur Steuerung des Aktors zur Einwirkung auf die Drahtelektrode entsprechend einer Steuersequenz zur Entgegenwirkung von Schwingungen der Drahtelektrode auf, wobei die Steuersequenz auf Basis einer Vormessung vordefiniert ist oder auf Basis einer Messung von Schwingungen der Drahtelektrode in Echtzeit ermittelt wird. Die Steuereinheit dient zur Ansteuerung des Aktors. Insbesondere kann durch die Steuereinheit beispielsweise eine Steuerspannung gemäß einer vordefinierten oder in Echtzeit ermittelten Steuersequenz an den Aktor angelegt werden. Die Steuersequenz kann insbesondere auf Basis einer Vormessung mit typischem Amplitudenbild vordefiniert sein. Durch diese Steuerspannung kann der Aktor entsprechend angesteuert werden. Damit kann Schwingungen der Drahtelektrode entgegengewirkt werden, und es können somit eine Reduktion der Amplituden und eine Dämpfung erreicht werden. Zudem erlaubt die Steuereinheit auch, eine Feinjustierung der Drahtelektrode vorzunehmen, um so eine sehr genaue Materialabtragung am Werkstück zu erreichen.

Bei einer Ausgestaltung umfasst die Vorrichtung weiterhin eine Messeinrichtung zur Messung von Schwingungen der Drahtelektrode; und eine Auswerteinheit zur Berechnung der Steuersequenz in Echtzeit auf Basis der Schwingungen der Drahtelektrode. Durch die Messeinrichtung werden die aktuellen Schwingungen der Drahtelektrode erfasst. Basierend auf dieser Messung kann in der Auswerteeinheit in Echtzeit eine Steuersequenz berechnet werden. Diese Steuersequenz kann als Basis für die Ansteuerung des Aktors mittels der Steuereinheit verwendet werden. Durch die Erfassung der Schwingungen sowie die darauf basierende Berechnung der Steuersequenz kann also ein Regelkreis gebildet werden. Dies resultiert in einer optimalen Reduktion der Amplitude und Dämpfung der Schwingungen der Drahtelektrode. Erfindungsgemäß ergibt sich eine höhere Genauigkeit, eine höhere Abtragrate sowie eine höhere Prozessstabilität im Vergleich zu bisherigen Vorrichtung zum rotativen Drahterodieren. Dieser Vorteil wird insbesondere bei hohen Drahtgeschwindigkeiten oder Rotationsgeschwindigkeiten des Werkstücks relevant.

Vorteilhafterweise umfasst die Messeinrichtung einen optischen Sensor, insbesondere eine Kamera oder einen Lichtschattensensor, oder einen kapazitiven Sensor. Oft ist der verfügbare Bauraum in unmittelbarer Näher zu Wirkbereich der Funkenerosion begrenzt. Durch die Verwendung eines optischen Sensors kann dieser Sensor auch mit einem Abstand zur Drahtelektrode angebracht sein. Hierbei ist insbesondere vorteilhaft, dass es ermöglicht wird, dass die Messung in unmittelbarer Nähe zum Wirkbereich der Funkenerosion stattfinden kann. Des Weiteren erlauben es die optischen Messprinzipien auch in verschmutzen, beispielsweise ölverspritzen, Bereichen zu messen. Alternativ kann auch ein kapazitiver Sensor verwendet werden. Dieser erlaubt es, eine Messung durchzuführen auch wenn keine visuelle Abtastung möglich ist.

Vorteilhafterweise ist die Messeinrichtung bezüglich der Umlaufrichtung der Drahtelektrode vor der Drahtführung angeordnet. Dies erlaubt eine besonders genaue Ermittlung der Schwingungen der Drahtelektrode und damit eine Steuersequenz zur optimalen Kompensation dieser Schwingungen.

Gemäß einem weiteren Aspekt betrifft die Erfindung eine Schleifmaschine zum Schleifen mittels einer metallgebundene Schleifscheibe mit einer erfindungsgemäßen Vorrichtung zum Abrichten der Schleifscheibe wie etwa oben beschrieben. Die Schleifscheibe stellt dabei das Werkstück dar und wird mittels Drahterosion bearbeitet. Die Erfindung erlaubt es, im Vergleich zu Vorrichtungen des Standes der Technik metallgebundene Schleifscheiben mit höherer Genauigkeit in der Maschine voll integriert bei gleicher Scheibenumfangsgeschwindigkeit wie beim Schleifen abzurichten. Eine genaue In-Prozess-Abrichtung, also eine Abrichtung während eines Schleifprozesses, sowie das Abrichten in der Nebenzeit werden dadurch ermöglicht. Die Abrichtvorrichtung kann dabei in die Schleifmaschine fest integriert sein oder kann als mobile Einheit ausgestaltet sein, die bei Bedarf zum Abrichten in verschiedenen Schleifmaschinen eingesetzt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand ausgewählter Ausführungsbeispiele im Zusammenhang mit den beiliegenden Zeichnungen näher beschrieben und erläutert. Es zeigen:
Fig. 1 eine schematische Darstellung eines Erodiervorgangs mit einer Vorrichtung zum rotativen Drahterodieren ;
Fig. 2 eine schematische Darstellung einer nicht erfindungsgemäßen Drahtführung;
Fig. 3 eine schematische Darstellung einer Vorrichtung zum rotativen Drahterodieren mit einer nicht erfindungsgemäßen Drahtführung.
Fig. 4 eine schematische Darstellung einer erfindungsgemäßen scheibenförmigen Drahtführung; und
Fig. 5 zwei Möglichkeiten zur Kontaktierung einer erfindungsgemäßen Drahtführung mit integriertem Piezoaktor/Führungselement.

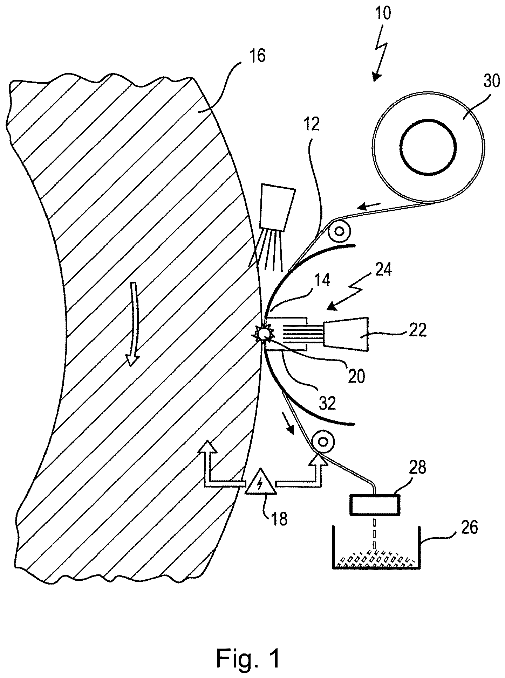

Fig. 1 zeigt eine Vorrichtung 10 zum rotativen Drahterodieren eines Werkstücks in schematischer Darstellung. Eine Drahtelektrode 12 wird über ein Führungselement 14 an einem Werkstück 16 entlanggeführt. Zwischen Werkstück 16 und Drahtelektrode 12 wird eine elektrische Spannung angelegt, so dass es zu einem Stromfluss zwischen beiden kommen kann, wenn diese in Kontakt zueinander kommen. Hierfür ist eine Stromzuführung 18 vorgesehen. Das Werkstück 16 rotiert, wie durch den eingezeichneten Pfeil angedeutet. Zur Spülung und zur Wirkung als Dielektrikum im Wirkbereich 20 der Funkenerosion ist eine Ölzuführung 22 vorgesehen. Im Wirkbereich 20 der Funkenerosion kommt es zu Entladungen im Dielektrikum zwischen Werkstück 16 und Drahtelektrode 12. Aufgrund angelegter Strompulse über die Stromzuführung 18 kommt es zu Funkenerosion und damit zu einer Materialabtragung am Werkstück 16 bzw. zu einer Materialübertragung vom Werkstück 16 auf die Drahtelektrode 12.

Da die Drahtelektrode 12 bei der Funkenerosion geschädigt wird, ist es für das funkenerosive Abtragen von Material notwendig, dass die Drahtelektrode 12 ständig erneuert wird und von einem Drahtvorrat 30 über eine Drahtführung 24 zu einem Abfallbehälter 26 für den Drahtabfall 26 laufen kann. Üblicherweise ist ein Drahtschneider 28 vorgesehen, mit dem die Drahtelektrode 12 periodisch bzw. erforderlichenfalls abgetrennt werden kann, um einen Materialstau zu vermeiden.

In Fig. 1 ist angedeutet, dass das Werkstück 16 rotiert. Aufgrund der Rotation des Werkstücks 16 sowie aufgrund der Geschwindigkeit der umlaufenden Drahtelektrode 12 kann die Drahtelektrode 12 in Schwingungen geraten und/oder ausgelenkt werden. Insbesondere können Schwingungen bzw. Auslenkungen im Wirkbereich 20 der Funkenerosion entstehen. In diesem Wirkbereich 20 ist die Drahtelektrode normalerweise frei gespannt.

Wie in Fig. 1 dargestellt, ist die vorliegende Erfindung insbesondere vorteilhaft, wenn die Drahtelektrode 12 auf einer kurzen Strecke im Wirkbereich 20 der Funkenerosion frei gespannt ist. Dies wird bei der dargestellten Ausführungsform durch eine stehende Drahtführung 24 mit einer Aussparung 32 erreicht. Es versteht sich, dass die Grundidee der vorliegenden Erfindung auch auf anders ausgeprägte Drahtführungen, beispielsweise Drahtführungen mit verschiedenen Rollen und/oder weiteren stehenden Elementen angewendet werden kann.

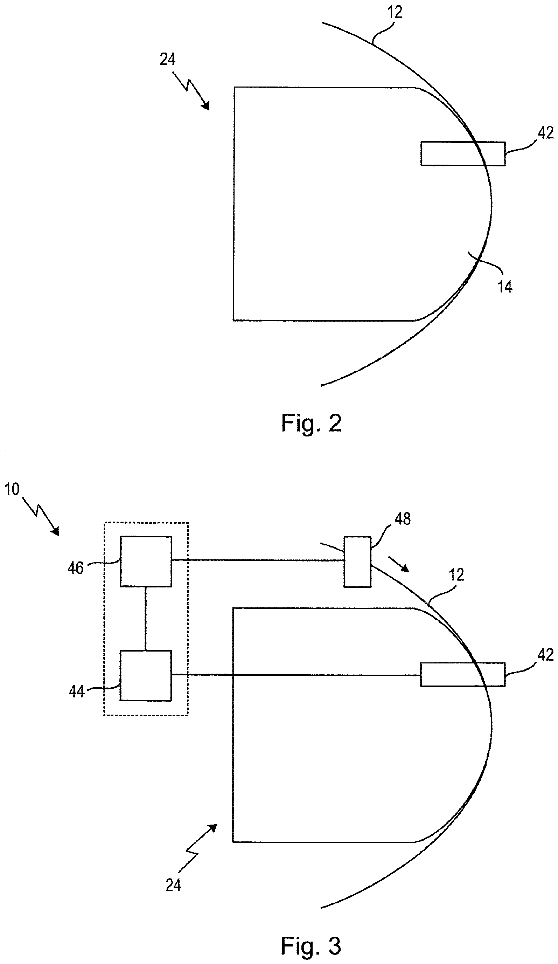

Die Drahtelektrode 12 kann beispielsweise mit einer Geschwindigkeit von ca. 100 mm/sec über die stehende Drahtführung 24 gezogen werden. Dadurch sowie durch Rückwirkungen aus dem Antrieb entstehen Schwingungen an der Stelle, an der die Drahtelektrode 12 frei gespannt ist. An dieser Stelle rotiert das Werkstück 16 vorbei und es finden die EDM-Entladungen (Funkenerosion) statt. Die erfindungsgemäße Drahtführung 24 erlaubt es, Schwingungen an dieser freien Strecke mittels eines Aktors (siehe Fig. 2) in der Drahtführung 24 entgegenzuwirken. In anderen Worten werden die Schwingungsamplituden der Drahtelektrode 12 in horizontaler und vertikaler Richtung verkleinert und gedämpft. Zudem erlaubt der Aktor auch eine Steuerung des Verlaufs der Drahtelektrode im Sinn einer Feinjustierung.

In Fig. 2 ist eine Ausführungsform einer erfindungsgemäßen Drahtführung 24 dargestellt. Die Drahtführung 24 umfasst ein Führungselement 14 zur Führung der Drahtelektrode 12 sowie einen Aktor 42 zur Einwirkung auf die Drahtelektrode 12. Als Führungselement 14 wird in dieser Darstellung insbesondere der Bereich der Drahtführung bezeichnet, der in unmittelbarem Kontakt zur Drahtelektrode 12 steht. Das zu erodierende Werkstück ist in Fig. 2 nicht gezeigt und würde sich auf der rechten Seite von Fig. 2 befinden.

Bei der in Fig. 2 dargestellten Ausführungsform ist ein separater Aktor 42 vorgesehen, der in direktem Kontakt zur Drahtelektrode 12 steht. Dieser Aktor kann beispielsweise ein Piezoaktor, ein MEMS-Aktor, ein Elektromotor oder ein Aktor basierend auf einer Schwingspule sein. Dieser Aktor 42 erlaubt das Ausüben eines Wegs bzw. einer Kraft auf die Drahtelektrode 12. Damit kann der Verlauf der Drahtelektrode 12 gegenüber der Drahtführung 24 bzw. gegenüber dem Führungselement 14 sowie dem Werkstück (nicht gezeigt) verändert werden. Zum einen kann damit Schwingungen der Drahtelektrode 12 entgegengewirkt werden. Dies entspricht einer Amplitudenverkleinerung bzw. Dämpfung. Zum anderen kann damit auch eine Feinjustierung, also eine Verlaufsänderung, der Drahtelektrode 12 erreicht werden. Durch eine solche Feinjustierung kann ein sehr genaues Verfahren der Drahtelektrode 12 gegenüber dem Werkstück erreicht werden. Folglich kann die Prozesskontrolle erhöht werden.

Bei der dargestellten Ausgestaltung der Drahtführung 24 ist der Aktor 42 separat zum Führungselement 14 ausgeführt. In einer vorteilhaften Ausführungsform der vorliegenden Erfindung sind Führungselement 14 und Aktor 42 integriert einteilig ausgeführt. In anderen Worten, die Drahtführung 24 wirkt als Führungselement und als Aktor. Dies kann beispielsweise durch eine Drahtführung 24 erreicht werden, die aus piezoelektrischem Material, beispielsweise einer Keramik, besteht, erreicht werden.

In Fig. 3 ist eine Vorrichtung 10 gezeigt, welche eine nicht erfindungsgemäße Drahtführung 24 umfasst.

Ein vorteilhaftes Anwendungsfeld einer solchen Vorrichtung gemäß der vorliegenden Erfindung findet sich bei der Abrichtung von metallgebundenen Schleifscheiben mit Diamant oder CBN-Schleifkorn in Schleifmaschinen. Bei solchen Schleifscheiben lösen die EDM-Pulse nur die Metallbindung auf. Das Schleifkorn wird durch die EDM-Pulse nicht abgetragen. Hierdurch können durch die Drahterosion sehr scharfe Schleifscheiben sowie sehr genau abgerichtete Schleifscheiben erreicht werden. Eine erfindungsgemäße Vorrichtung 10 kann als Erodiereinheit in eine Schleifmaschine integriert werden. Insbesondere erlaubt eine erfindungsgemäße Vorrichtung eine modulare Integration in eine Schleifmaschine. Alternativ kann eine erfindungsgemäße Vorrichtung als mobile Bearbeitungseinheit oder eigenständige Abrichtmaschine ausgebildet sein.

Erfindungsgemäß kann die Vorrichtung 10 weiterhin eine Steuereinheit 44 sowie eine Auswerteeinheit 46, die mit einer Messeinrichtung 48 in Verbindung steht, umfassen. Steuereinheit 44 und Auswerteeinheit 46 können dabei separat oder kombiniert in Hard- oder (teilweise) in Software umgesetzt werden. Üblicherweise sind Steuereinheit 44 und Auswerteeinheit 46 in Form eines Mikrokontrollers umgesetzt.

Die Steuereinheit steht mit dem Aktor 42 in Verbindung. Der Aktor 42 wird durch die Steuereinheit 44 gemäß einer Steuersequenz angesteuert. Diese Steuersequenz entspricht einem Signal zur Steuerung der durch den Aktor 42 auf die Drahtelektrode 12 ausgeübten Kraft bzw. Einwirkung. Durch eine entsprechende Steuersequenz kann zum einen eine Amplitudenverkleinerung und Dämpfung von Schwingungen der Drahtelektrode 12 und zum anderen eine Feinjustierung durch eine Verlaufsänderung der Drahtelektrode 12 erreicht werden.

Die Steuersequenz kann vordefiniert sein. Hierzu kann beispielsweise basierend auf einer experimentellen Untersuchung des Verhaltens der Drahtelektrode 12 bei einem bestimmten Werkstück oder bei einem bestimmten Typ von Werkstücken vorgenommen werden und analysiert werden, inwiefern ein wiederkehrendes Schwingungsmuster entsteht, welches gemäß einer vordefinierten Steuersequenz kompensiert werden kann. Hierzu kann beispielsweise durch einen Hersteller einer erfindungsgemäßen Drahtführung bzw. einer erfindungsgemäßen Vorrichtung eine entsprechende Steuersequenz vorgegeben werden. Es ist ebenfalls möglich, dass für verschiedene Werkstücke und/oder Betriebsmodi der Vorrichtung (Rotationsgeschwindigkeit des Werkstücks, Umlaufgeschwindigkeit der Drahtelektrode, Antriebselementverschleiß etc.) verschiedene vordefinierte Steuersequenzen vorgegeben sind. Beispielsweise sind bei einer erfindungsgemäßen Drahtführung, bei der die Drahtelektrode zumindest im Wirkbereich der Funkenerosion frei gespannt ist, harmonische Schwingungen in Abhängigkeit der Dimensionierung des frei gespannten Teils der Drahtelektrode möglich. Diese können zumindest zum Teil als konstant angenommen und damit mittels einer vordefinierten Steuersequenz kompensiert werden.

Alternativ ist es erfindungsgemäß ebenfalls möglich, dass eine separate Auswerteeinheit 46 vorgesehen ist, die der Steuereinheit 44 die Steuersequenz in Echtzeit übermittelt. Die Auswerteeinheit berechnet die Steuersequenz basierend auf einer Auswertung der aktuellen Schwingungen der Drahtelektrode 12. Eine Messeinrichtung 48 erlaubt eine Messung der Schwingungen der Drahtelektrode 12. Basierend auf dieser Messung wird in der Auswerteeinheit 46 eine entsprechende Steuersequenz zur Kompensation der Schwingungen berechnet. Diese wird dann an die Steuereinheit 44 und an den Aktor 42 weitergegeben. Dies entspricht einem Regelkreis.

Bevorzugt umfasst die Messeinrichtung 48 einen optischen Sensor, insbesondere eine Kamera oder einen Lichtschattensensor. Ein optischer Sensor kann entweder nur horizontale bzw. vertikale Schwingungen der Drahtelektrode 12 oder Schwingungen in beide Richtungen erfassen. Die Verwendung eines optischen Sensors erlaubt es, dass nur ein geringer Bauraum vorgesehen sein muss und dass die Erfassung der Schwingungen in unmittelbarer Nähe zum Wirkbereich der Funkenerosion sowie zum Aktor 42 vorgesehen sein kann. Alternativ kann auch ein kapazitiver Sensor verwendet werden. Dieser hat jedoch oft den Nachteil, dass er nur in sauberen Umgebungen funktioniert während die unmittelbare Umgebung des Wirkbereichs der Funkenerosion oft ölig ist, was eine Messung mit einem kapazitiven Sensor erschwert. Weitere Sensoren als Messeinrichtung 48 sind denkbar.

Es hat sich als vorteilhaft herausgestellt, dass die Messeinrichtung 48 in Richtung der Umlaufrichtung der Drahtelektrode 12 vor dem Wirkbereich der Funkenerosion angeordnet ist. Die Messeinrichtung 48 kann auch die Erfassung der Geschwindigkeit der Drahtelektrode erlauben. Basierend auf der Messung der Messeinrichtung kann die entsprechende Steuersequenz zum Kompensation der Schwingungen berechnet werden. In diesem Zusammenhang wird unter einer Steuersequenz sinngemäß ebenfalls ein Signal zur Feinjustierung des Verlaufs der Drahtelektrode verstanden. Die Steuersequenz entspricht demnach einem Steuersignal, welches auf Basis einer Eingabe durch ein Programm oder durch einen Benutzer über eine entsprechende Benutzerschnittstelle eingebracht wird.

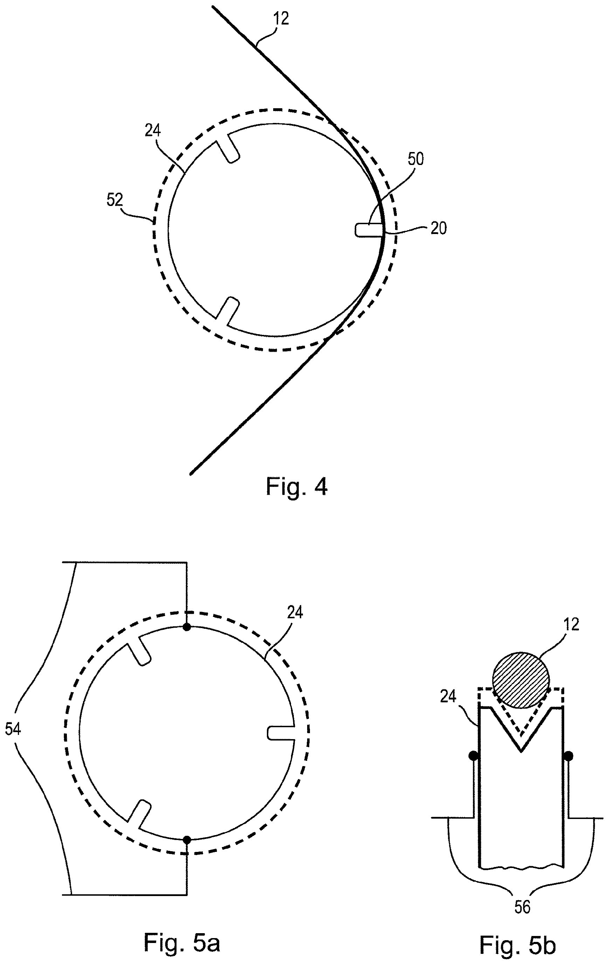

In Fig. 4 ist eine erfindungsgemäße Ausführungsform der vorliegenden Erfindung dargestellt. Die Drahtführung 24 ist dabei scheibenförmig ausgebildet. Die Scheibe weist eine Aussparung 50 im Wirkbereich der Funkenerosion 20 auf. Die Drahtelektrode 12 ist in diesem Bereich frei gespannt. Damit kommt es zu einem geringeren Materialverschleiß an der Drahtführung. Bezüglich der weiteren Vorteile, die eine scheibenförmige Drahtführung bringt, sei auf EP 2 607 006 A1 verwiesen. Insbesondere erlaubt eine keramische, scheibenförmige Drahtführung eine Integration von Führungselement mit einem Piezoaktor.

In Fig. 4 ist auch dargestellt, dass Führungselement und Aktor integriert ausgeführt sind. Demnach wirkt die dargestellte Drahtführung 24 einerseits zur Führung der Drahtelektrode 12 und andererseits zur Einwirkung auf die Drahtelektrode 12 als Aktor, wie oben beschrieben. Dies kann durch eine Drahtführung erreicht werden, die aus piezoelektrischem Material, insbesondere aus piezoelektrischer Keramik, besteht. Ausgenutzt wird der piezoelektronische Ausdehnungseffekt des piezoelektrischen Materials. Durch das Anlegen einer Spannung an ein piezoelektrisches Material verändert sich dessen Form. Wenn demnach ein piezoelektrisches Material als Drahtführung bzw. als Führungselement verwendet wird, kann eine Drahtführung mit integriertem Führungselement und Aktor geschaffen werden.

In Fig. 4 ist dargestellt, dass sich die scheibenförmige Drahtführung 24 radial zu einem größeren Umfang 52 ausdehnen kann. Eine übliche Größenordnung für die Ausdehnung (auch als Auslenkung bezeichnet) liegt im Bereich von wenigen Zehnteln Prozent. Hierzu ist je nach verwendetem piezoelektrischem Material eine angelegte Spannung im Bereich von 100 Volt oder mehr notwendig. Durch die Ausdehnung wird auf die Drahtelektrode 12 eingewirkt, sodass eine Dämpfung von Schwingungen sowie eine Feinjustierung erreicht werden kann.

Erfindungsgemäß ist die Drahtführung einstückig ausgebildet , Führungselement und Aktor sind also integriert .

In Fig. 5 sind zwei bevorzugte Kontaktierungsmöglichkeiten für eine erfindungsgemäße scheibenförmige Drahtführung 24 aus piezoelektrischem Material (Führungselement und Aktor integriert) dargestellt.

Verschiedene piezoelektrische Materialien, insbesondere Keramiken, haben unterschiedliche Eigenschaften bezüglich der Ausdehnung infolge einer angelegten Spannung. Insbesondere gibt es Materialien, die sich in Richtung der angelegten Spannung ausdehnen bzw. zusammenziehen (Piezo-Längseffekt) sowie Materialien, die sich quer zur angeregten Spannung ausdehnen bzw. zusammenziehen (Piezo-Quereffekt). Beide Materialien können erfindungsgemäß als Führungselement und Aktor verwendet werden.

Es erfolgt eine Kontaktierung zu einer Spannungsquelle, die im Sinne einer Steuereinheit das Anlegen einer Steuersequenz erlaubt. Beispielsweise kann durch eine Kontaktierung an radial gegenüberliegenden Umfangsstellen der scheibenförmigen Drahtführung, wie in Fig. 5a dargestellt, der Piezo-Längseffekt ausgenutzt werden. Demnach führt eine angelegte Spannung an Kontaktierungsstellen 54 zu einer Änderung des Umfangs der Drahtführung 24. Alternativ dazu ist eine Ausnutzung des Piezo-Quereffekts, wie in Fig. 5b dargestellt, möglich. Hierbei findet eine Kontaktierung an Kontaktierungsstellen 56 an gegenüberliegenden Stirnseiten der scheibenförmigen Drahtführung 24 statt. Der erreichte Effekt bezüglich der Ausdehnung der Drahtführung in Radialrichtung und bezüglich der Änderung des Verlaufs der Drahtelektrode 12 ist für beide Kontaktierungsarten aufgrund der unterschiedlichen Materialien folglich derselbe. Die Ausdehnung ist in den Figs. 5a und 5b jeweils gestrichelt angedeutet.

Vorteilhaft ist es, wenn die Kontaktierung und Ansteuerung der integriert ausgeführten Drahtführung in einem Klemmhalter integriert ausgeführt ist.

In Bezug zu Fig. 3 ist die Steuereinheit 44 demnach als Spannungsquelle zu verstehen, mittels welcher eine Spannung an die piezoelektrische Drahtführung 24 angelegt wird. Diese angelegte Spannung ergibt sich als Steuersequenz beispielsweise auf Basis einer Messung der Schwingungen der Drahtelektrode 12.

Zuletzt bezieht sich die vorliegende Erfindung auf ein Verfahren zum rotativen Drahterodieren eines Werkstücks. Zunächst werden die Schwingungen der Drahtelektrode gemessen. Üblicherweise findet diese Messung mittels einer geeigneten Messeinrichtung statt. Danach wird basierend auf der Messung bzw. auf den gemessenen Schwingungen der Drahtelektrode eine Steuersequenz in Echtzeit ermittelt. Dies erfolgt üblicherweise in einer Auswerteeinheit. Zuletzt wird, üblicherweise mittels einer Steuereinheit, ein Aktor entsprechend der Steuersequenz angesteuert. Der Aktor wirkt auf die Drahtelektrode ein, bzw. übt einen Weg bzw. eine Kraft entsprechend der Steuersequenz aus. Damit wirkt der Aktor Schwingungen der Drahtelektrode entgegen, bzw. dämpft diese. Das erfindungsgemäße Verfahren kann beispielsweise auf einem Steuerprozessor in einer Drahterodiermaschine zur Anwendung kommen.

Auch wenn die Erfindung im Hinblick auf die Zeichnungen und die vorstehende Beschreibung im Detail dargestellt und beschrieben wurde, dient diese Darstellung und Beschreibung lediglich der Erläuterung anhand von Beispielen ist nicht beschränkend zu verstehen. Die Erfindung ist nicht auf die offenbarten Ausführungsbeispiele beschränkt.

Andere Varianten der offenbarten Ausführungsbeispiele können vom Fachmann verstanden und im Rahmen der Ansprüche ausgeführt werden. Und zwar mit Hilfe eines Verständnisses der Zeichnungen, der Offenbarung und der angehängten Ansprüche. In den Ansprüchen sind die Wörter "mit" oder "aufweisend" nicht dahingehend zu verstehen, dass andere Elemente oder Schritte ausgeschlossen wären. Außerdem schließen die unbestimmten Artikel "ein", "eine", oder "eines" nicht eine Mehrzahl des entsprechenden Elements aus. Die Begriffe "links", "rechts", "oben", "unten" etc. werden lediglich für ein besseres Verständnis der Erfindung verwendet und beschränken nicht den Schutzbereich der Erfindung. Die alleinige Tatsache, dass bestimmte Merkmale in voneinander verschiedenen abhängigen Ansprüchen erwähnt sind, bedeutet nicht, dass nicht auch eine Kombination dieser Merkmale vorteilhaft sein könnte. Kein Bezugszeichen soll dahingehend verstanden werden, dass es eine Einschränkung des Schutzbereichs bedeutet.

## Patentansprüche

1. Drahtführung (24) zur Führung einer Drahtelektrode (12) beim rotativen Drahterodieren
eines Werkstücks (16), mit
einem Führungselement (14) zur Führung der Drahtelektrode (12); und
einem Aktor (42) zur Einwirkung auf die Drahtelektrode (12), um den Verlauf der Drahtelektrode (12) im Wirkbereich (20) der Funkenerosion zur Entgegenwirkung von Schwingungen der Drahtelektrode (12) und/oder zur Feinjustierung der Drahtelektrode (12) zu verändern, wobei die Drahtführung (24) im Wesentlichen scheibenförmig mit einer Führungsnut für die Drahtelektrode (12) im Umfang ausgebildet ist,
**dadurch gekennzeichnet, dass**
der Aktor (42) als Piezoaktor ausgebildet ist und eine erste elektrische Kontaktierungsstelle (54, 56) und eine zweite elektrische Kontaktierungsstelle (54, 56) zum Anlegen einer Spannung, um den Verlauf der Drahtelektrode (12) durch eine Formveränderung des Piezoaktors zu verändern, umfasst;
der Piezoaktor zur Auslenkung der Drahtelektrode (12) radial zur scheibenförmigen Drahtführung (24) und orthogonal zur Drahtelektrode (12) in ihrem Wirkbereich (20) ausgebildet ist; und
das Führungselement (14) und der Aktor (42) als integriertes Element ausgebildet sind.

2. Drahtführung (24) nach Anspruch 1, wobei der Aktor (42) zur Einwirkung entsprechend einer Steuersequenz zur Entgegenwirkung von Schwingungen der Drahtelektrode (12) ausgebildet ist, wobei die Steuersequenz auf Basis einer Vormessung vordefiniert ist oder auf Basis einer Messung von Schwingungen der Drahtelektrode (12) in Echtzeit ermittelt wird.

3. Drahtführung (24) nach Anspruch 1, wobei die erste elektrische Kontaktierungsstelle (56) und die zweite elektrische Kontaktierungsstelle (56) auf gegenüberliegenden Stirnseiten der scheibenförmigen Drahtführung (24) angeordnet sind und die Formveränderung durch den Piezo-Quereffekt zustande kommt.

4. Drahtführung (24) nach Anspruch 1, wobei die erste elektrische Kontaktierungsstelle (54) und die zweite elektrische Kontaktierungsstelle (54) an radial gegenüberliegenden Umfangsstellen der scheibenförmigen Drahtführung (24) parallel zur Drahtelektrode (12) in ihrem Wirkbereich (20) angeordnet sind und die Formveränderung durch den Piezo-Längseffekt zustande kommt.

5. Vorrichtung zum rotativen Drahterodieren eines Werkstücks (16), mit einer Drahtführung nach einem der Ansprüche 1 bis 4.

6. Vorrichtung nach Anspruch 5, mit einer Steuereinheit (44) zur Steuerung des Aktors (42) zur Einwirkung auf die Drahtelektrode (12) entsprechend einer Steuersequenz zur Entgegenwirkung von Schwingungen der Drahtelektrode (12), wobei die Steuersequenz auf Basis einer Vormessung vordefiniert ist oder auf Basis einer Messung von Schwingungen der Drahtelektrode (12) in Echtzeit ermittelt wird.

7. Vorrichtung nach Anspruch 6, mit
einer Messeinrichtung (48) zur Messung von Schwingungen der Drahtelektrode (12); und
einer Auswerteinheit (46) zur Berechnung der Steuersequenz in Echtzeit auf Basis der Schwingungen der Drahtelektrode (12).

8. Vorrichtung nach Anspruch 7, wobei die Messeinrichtung (48) einen optischen Sensor, insbesondere eine Kamera oder einen Lichtschattensensor, oder einen kapazitiven Sensor umfasst.

9. Vorrichtung nach Anspruch 7, wobei die Messeinrichtung (48) bezüglich der Umlaufrichtung der Drahtelektrode (12) vor der Drahtführung (24) angeordnet ist.

10. Schleifmaschine zum Schleifen mittels einer metallgebundenen Schleifscheibe mit einer Vorrichtung (10) nach Anspruch 5 zum Abrichten der Schleifscheibe.

## Claims

1. Wire guide (24) for guiding a wire electrode (12) during rotary wire eroding of a workpiece (16), having
a guide element (14) for guiding the wire electrode (12); and
an actuator (42) for acting on the wire electrode (12) in order to change the course of the wire electrode (12) in the active region (20) of the spark erosion to counteract vibrations of the wire electrode (12) and/or for fine adjustment of the wire electrode (12), wherein the wire guide (24) is substantially disc-shaped with a guide groove for the wire electrode (12) in the periphery,
**characterised in that**
the actuator (42) is configured as a piezo-actuator and comprises a first electrical contact point (54, 56) and a second electrical contact point (54, 56) for applying a voltage in order to change the course of the wire electrode (12) by changing the shape of the piezo-actuator;
the piezo actuator is configured to deflect the wire electrode (12) radially to the disc-shaped wire guide (24) and orthogonally to the wire electrode (12) in its effective range (20); and
the guide element (14) and the actuator (42) are configured as integrated element.

2. Wire guide (24) according to claim 1, wherein the actuator (42) is configured to act according to a control sequence for counteracting vibrations of the wire electrode (12), wherein the control sequence is predefined on the basis of a pre-measurement or is determined on the basis of a measurement of vibrations of the wire electrode (12) in real time.

3. Wire guide (24) according to claim 1, wherein the first electrical contact point (56) and the second electrical contact point (56) are arranged on opposite end faces of the disc-shaped wire guide (24) and the change in shape is caused by the piezo transverse effect.

4. Wire guide (24) according to claim 1, wherein the first electrical contact point (54) and the second electrical contact point (54) are arranged at radially opposite circumferential points of the disc-shaped wire guide (24) parallel to the wire electrode (12) in its effective area (20) and the change in shape is caused by the piezo longitudinal effect.

5. Device for the rotary wire eroding of a workpiece (16), having a wire guide according to one of claims 1 to 4.

6. Device according to claim 5, having a control unit (44) for controlling the actuator (42) for acting on the wire electrode (12) according to a control sequence for counteracting vibrations of the wire electrode (12), the control sequence being predefined on the basis of a pre-measurement or being determined on the basis of a measurement of vibrations of the wire electrode (12) in real time.

7. Device according to claim 6, having
a measuring device (48) for measuring vibrations of the wire electrode (12); and an evaluation unit (46) for calculating the control sequence in real time on the basis of the vibrations of the wire electrode (12).

8. Device according to claim 7, wherein the measuring device (48) comprises an optical sensor, in particular a camera or a light shadow sensor, or a capacitive sensor.

9. Device according to claim 7, wherein the measuring device (48) is arranged in front of the wire guide (24) with respect to the direction of rotation of the wire electrode (12).

10. Grinding machine for grinding by means of a metal-bonded grinding wheel having a device (10) according to claim 5 for dressing the grinding wheel.

## Revendications

1. Guide-fil (24) destiné au guidage d'un fil-électrode (12) lors de l'étincelage par fil rotatif d'une pièce ouvrée (16), comprenant
un élément de guidage (14) destiné au guidage du fil-électrode (12) ; et
un actionneur (42) destiné à intervenir sur le fil-électrode (12) afin de modifier le tracé du fil-électrode (12) dans la zone d'action (20) de l'électroérosion afin de contrer des oscillations du fil-électrode (12) et/ou en vue du réglage précis du fil-électrode (12), le guide-fil (24) étant configuré sensiblement en forme de disque avec une rainure de guidage pour le fil-électrode (12) dans le pourtour, **caractérisé en ce que**
l'actionneur (42) est réalisé sous la forme d'un actionneur piézoélectrique et comporte un premier point de mise en contact électrique (54, 56) et un deuxième point de mise en contact électrique (54, 56) servant à l'application d'une tension en vue de modifier le tracé du fil-électrode (12) par une modification de la forme de l'actionneur piézoélectrique ;
l'actionneur piézoélectrique est configuré pour dévier le fil-électrode (12) dans le sens radial par rapport au guide-fil (24) en forme de disque et orthogonalement par rapport au fil-électrode (12) dans sa zone d'action (20) ; et
l'élément de guidage (14) et l'actionneur (42) sont réalisés sous la forme d'un élément intégré.

2. Guide-fil (24) selon la revendication 1, l'actionneur (42) étant configuré pour intervenir conformément à une séquence de commande en vue de contrer les oscillations du fil-électrode (12), la séquence de commande étant prédéfinie sur la base d'une mesure préalable ou déterminée sur la base d'une mesure des oscillations du fil-électrode (12) en temps réel.

3. Guide-fil (24) selon la revendication 1, le premier point de mise en contact électrique (56) et le deuxième point de mise en contact électrique (56) étant disposés sur des côtés frontaux opposés du guide-fil (24) en forme de disque et la modification de la forme étant accomplie par l'effet transversal piézoélectrique.

4. Guide-fil (24) selon la revendication 1, le premier point de mise en contact électrique (54) et le deuxième point de mise en contact électrique (54) étant disposés sur des points périphériques radialement opposés du guide-fil (24) en forme de disque, parallèlement au fil-électrode (12) dans sa zone d'action (20), et la modification de la forme étant accomplie par l'effet transversal piézoélectrique.

5. Arrangement d'étincelage par fil rotatif d'une pièce ouvrée (16), comprenant un guide-fil selon l'une des revendications 1 à 4.

6. Arrangement selon la revendication 5, comprenant une unité de commande (44) destinée à commander l'actionneur (42) en vue d'intervenir sur le fil-électrode (12) conformément à une séquence de commande en vue de contrer les oscillations du fil-électrode (12), la séquence de commande étant prédéfinie sur la base d'une mesure préalable ou déterminée sur la base d'une mesure des oscillations du fil-électrode (12) en temps réel.

7. Arrangement selon la revendication 6, comprenant
un dispositif de mesure (48) destiné à mesurer les oscillations du fil-électrode (12) ; et
une unité d'interprétation (46) destinée à calculer la séquence de commande en temps réel sur la base des oscillations du fil-électrode (12).

8. Arrangement selon la revendication 7, le dispositif de mesure (48) comportant un capteur optique, notamment une caméra ou un capteur d'ombre et de lumière, ou un capteur capacitif.

9. Arrangement selon la revendication 7, le dispositif de mesure (48) étant disposé devant le guide-fil (24) en référence à la direction circonférentielle du fil-électrode (12).

10. Rectifieuse destinée à rectifier au moyen d'un disque abrasif à liant métallique comprenant un arrangement (10) selon la revendication 5 destiné à dresser le disque abrasif.
